# EUROPEAN PATENT APPLICATION

(11) **EP 1 357 195 A2**
(43) Date of publication of application: **29.10.2003**
(21) Application number: 03009188.8
(22) Date of filing: 22.04.2003
(51) Int. Cl.: C21B 13/14, C21B 13/00

(54) **Method for reducing wet waste from metal refining processes**

(30) Priority: 24.04.2002 JP 2002122319
(71) Applicant: KABUSHIKI KAISHA KOBE SEIKO SHO, Kobe-shi, Hyogo 651-8585 (JP)
(72) Inventor: Sugitatsu, Hiroshi, Kobe Corporate Research Labor., Kobe-shi, Hyogo 651-2271 (JP); Uemura, Hiroshi, Kobe Corporate Research Laborat., Kobe-shi, Hyogo 651-2271 (JP)
(74) Representative: Müller-Boré & Partner Patentanwälte

(57) **Abstract**

Provided is a method for recovering metals by drying and reducing wet waste generated in the metal refining process, in which odorous components and hazardous substances, such as dioxins, contained in an exhaust gas from the dryer can be efficiently and easily neutralized or removed. Wet waste (A) is dried in a rotary dryer (1), and when necessary, dry waste B and a carbonaceous reductant C are added to dried dust A'. The mixture is agglomerated with a pressure molding machine 3. The agglomerate (E) is fed into a rotary hearth furnace 4 to perform reduction by heating. A dryer exhaust gas (P) generated when the wet waste (A) is dried in the dryer (1) is fed into the reduction furnace 4 and/or an exhaust gas (G) emitted from the reduction furnace (4).

## Description

The present invention relates to a method for reducing wet waste generated in the metal refining process, such as in the iron-making process.

Wet waste generated in the metal refining process, such as in the iron-making process, contains relatively large amounts of metal oxides, such as iron oxide. Therefore, various methods for recovering metals, such as iron, from wet waste by reduction treatment have been disclosed as described below.

For example, a method is disclosed in which a slurry of wet waste, such as converter dust or open-hearth furnace dust, is recovered from a clarifier with a slurry pump, dried with a spray dryer, and mixed with coke. The mixture is then pelletized. The resultant pellets are reduced in a high-temperature reduction furnace. An exhaust gas from the spray dryer is passed through a dust collector and is released from a smokestack through a different channel from that of an exhaust gas from the reduction furnace.

In another method, green pellets obtained by pelletizing a mixed powder of an iron feedstock and a reductant are dried with an exhaust gas from a reduction furnace, and the resultant dried pellets are fed into the reduction furnace to carry out reduction treatment. In order to dry the green pellets, combustion air is fed into the exhaust gas from the reduction furnace to burn unburnt gas (CO), and then the exhaust gas is introduced into a dryer. An exhaust gas from the dryer is subjected to dust collection and desulfurization, and then is released into the atmosphere through a smokestack.

In another method, an iron-bearing material which is a by-product in the steelmaking process or the other metallurgical process is dried in a dryer, and a carbonaceous material and an organic binder are added thereto, followed by mixing. The dried mixture is formed into green compacts with a pressure molding machine, and the green compacts are reduced in a high-temperature reduction furnace, such as a rotary hearth furnace. A dryer exhaust gas is subjected to dust collection together with a reduction furnace exhaust gas which has been cooled through a heat exchanger, and then is released from a smokestack.

A method for treating exhaust gas is also disclosed, the method including a step of passing an exhaust gas from a refuse drying furnace through a deodorization furnace in order to pyrolyze or combustion decompose odorous components after the exhaust gas is subjected to dust collection and heated, and a step of cooling the exhaust gas passed through the deodorization furnace and decomposing remaining hazardous substances, such as dioxins, with a catalytic treatment unit.

In the conventional techniques described above, however, when a material, such as wet waste containing a large amount of oil, dioxins, etc., is treated, an exhaust gas from the dryer (a dryer exhaust gas) contains odorous components, dioxins, etc., in high concentration. That is, when the material to be treated contains large amounts of odorous substances, such as toluene and ammonia, if the material is heated in the dryer, the odorous substances vaporize, and as a result, the dryer exhaust gas contains the odorous components in high concentration. Incidentally, 22 odorous substances are specified in the Offensive Odor Control Law. When the material to be treated contains large amounts of dioxins, dioxin precursors, etc., if the material is heated in the dryer, dioxins fly into the dryer exhaust gas.

Therefore, dryer exhaust gases are not allowed to be released into the atmosphere as they are, and deodorization units, dioxin-removal units, etc., must be installed. Deodorization may be performed by various methods, such as an adsorption method, a combustion deodorization method, and a catalytic oxidation method. However, the deodorization units are expensive and operating costs thereof are high. When the combustion deodorization method is used, there is a possibility that dioxins are generated in the deodorization furnace. In order to remove dioxins, expensive units, such as a catalytic treatment apparatus, are required, and the operating costs thereof are high. Therefore, in order to neutralize dryer exhaust gases, the equipment and processing costs are extremely increased.

The present invention has been achieved in order to overcome the problems described above. It is an object of the present invention to provide a method for recovering metals by drying and reducing wet waste generated in the metal refining process, in which odorous components and hazardous substances, such as dioxins, contained in an exhaust gas from the dryer can be efficiently and easily neutralized or removed.

In one aspect of the present invention, a method for reducing wet waste includes a drying step of drying wet waste, generated during metal refining, in a dryer, a reduction step of reducing the dried waste in a reduction furnace, and a dryer-exhaust-gas-feeding step of feeding all or a portion of a dryer exhaust gas generated in the drying step into the reduction furnace.

In another aspect of the present invention, a method for reducing wet waste includes a drying step of drying wet waste, generated during metal refining, in a dryer, a reduction step of reducing the dried waste in a reduction furnace, and a dryer-exhaust-gas-mixing step of mixing all or a portion of a dryer exhaust gas generated in the drying step into a reduction furnace exhaust gas emitted from the reduction furnace.

In another aspect of the present invention, a method for reducing wet waste includes a drying step of drying wet waste, generated during metal refining, in a dryer, a reduction step of reducing the dried waste in a reduction furnace, a dryer-exhaust-gas-feeding step of feeding at least a portion of a dryer exhaust gas generated in the drying step into the reduction furnace, and a dryer-exhaust-gas-mixing step of mixing at least a portion of the dryer exhaust gas into a reduction furnace exhaust gas emitted from the reduction furnace.

Preferably, in the dryer-exhaust-gas-feeding step, the dryer exhaust gas fed into the reduction furnace is enriched with oxygen.

Preferably, the reduction furnace exhaust gas into which the dryer exhaust gas is mixed has a temperature of 800°C or more.
FIG. 1 is a flow diagram which schematically shows a wet waste reducing apparatus in a first embodiment (Example 1) of the present invention;
FIG. 2 is a flow diagram which schematically shows a wet waste reducing apparatus in a second embodiment (Example 2); and
FIG. 3 is a flow diagram which schematically shows a wet waste reducing apparatus in a third embodiment (Example 3).

The embodiments of the present invention will be described in detail with reference to the drawings.

### FIRST EMBODIMENT

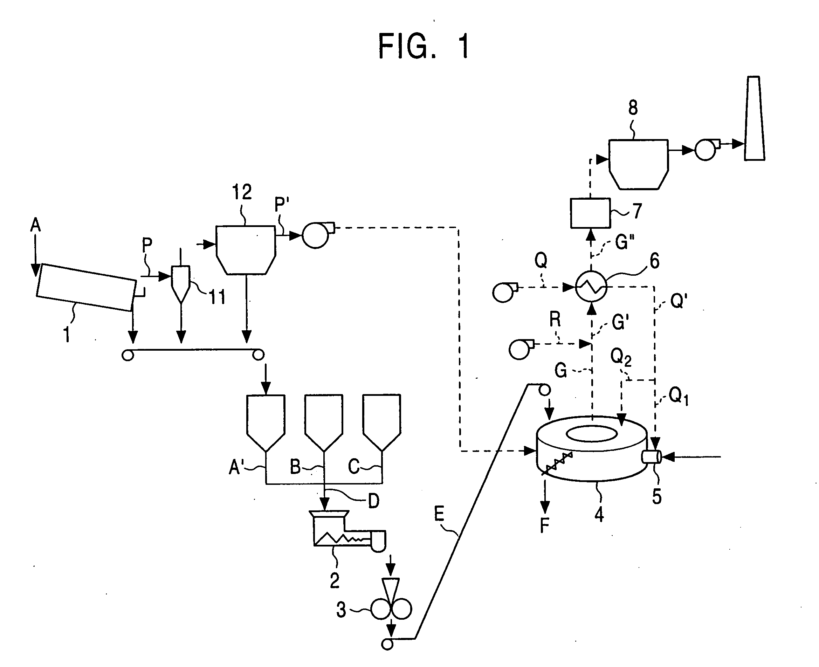

FIG. 1 is a flow diagram which schematically shows a wet waste reducing apparatus in a first embodiment of the present invention. Wet waste having a high content of water, (usually with a water content of 1% by mass or more) is one of the wastes generated in the iron-making process. Examples of the wet wastes include blast furnace sludge, converter dust, pickling sludge, and mill sludge. Such wet wastes are thickened with a thickener or the like and dewatered with a conventional drum filter or filter press. However, since the particle sizes are small, the residual water content in the wet wastes is still high at this stage. In order to agglomerate such wet wastes before reduction, the water content must be further decreased. Therefore, wet waste A to be treated is fed into a dryer 1 in order to remove water. Additionally, the wet waste A is not limited to one type of wet waste, and a plurality of types of wet waste may be mixed for use. Alternatively, dry waste may be mixed into wet waste so that the average water content is decreased. As the dryer 1, a hot air dryer is usually used, and a rotary dryer is used in this embodiment. The present invention is not limited thereto, and other types of dryers, such as a fluidized-bed dryer and a through-flow dryer, may also be used. When the wet waste A is dried by hot air in the dryer 1, portions of the substances contained in the wet waste fly into the hot air. If such substances are hazardous, the exhaust gas must be clarified before being released into the atmosphere. A method for clarifying the dryer exhaust gas will be described later.

When necessary, other materials, such as dry waste B and a carbonaceous reductant C, are added to dried waste A' and mixing is performed with a mixer 2 to produce a mixed feedstock D. The mixed feedstock D may be fed into a reduction furnace 4 as it is without being agglomerated in order to carry out reduction treatment. In many cases, agglomeration is performed before reduction. In this embodiment, in order to perform agglomeration, a binder is added to the mixed feedstock D as required, and compression molding is performed using a pressure molding machine 3. Any other agglomeration method, such as tumbling agglomeration or extrusion molding, may be used.

An agglomerate E is fed into the reduction furnace 4. Most preferably, a rotary hearth furnace is used as the reduction furnace 4 because of its high processing efficiency. Any other furnace, such as a rotary kiln, may also be used. The agglomerate E is heated by a burner 5 in the reduction furnace 4, and metal oxides, such as iron, nickel, and chromium components, in the agglomerate E are reduced and metallized by the carbonaceous reductant, etc. A reduced metal F is discharged from the reduction furnace 4.

In order to effectively use CO gas generated by reduction, secondary combustion air Q2 is blown into the reduction furnace 4 to burn the CO gas. In many cases, an exhaust gas (reduction furnace exhaust gas) G from the reduction furnace 4 has a high temperature of 1,100°C or more, and cannot be fed into a heat exchanger 6 as it is. Therefore, a predetermined amount of ambient temperature air R as a diluent gas is injected into the reduction furnace exhaust gas G to control the temperature of the reduction furnace gas. The temperature-controlled reduction furnace exhaust gas G' is fed into the heat exchanger 6 to preheat a predetermined amount of air Q. The reduction furnace exhaust gas G" passed through the heat exchanger 6 is fed into a conditioner 7 in which the temperature and the water content are adjusted in order to protect a dust collector 8, etc. The reduction furnace exhaust gas G'' is then subjected to dust collection with the dust collector 8 and is released into the atmosphere. The air Q' preheated by the heat exchanger 6 is split into primary combustion air Q1 for the burner 5 and the secondary combustion air Q2 before being blown into the reduction furnace 4.

In the case when the wet waste A contains large amounts of odorous substances, such as toluene and ammonia, when the wet waste A is heated in the dryer 1, the odorous substances vaporize and the dryer exhaust gas P contains the odorous substances in high concentration. In the case when the wet waste A contains large amounts of dioxins, dioxin precursors, etc., when the wet waste A is heated in the dryer 1, dioxins fly into the dryer exhaust gas P and are contained in the dryer exhaust gas P in high concentration.

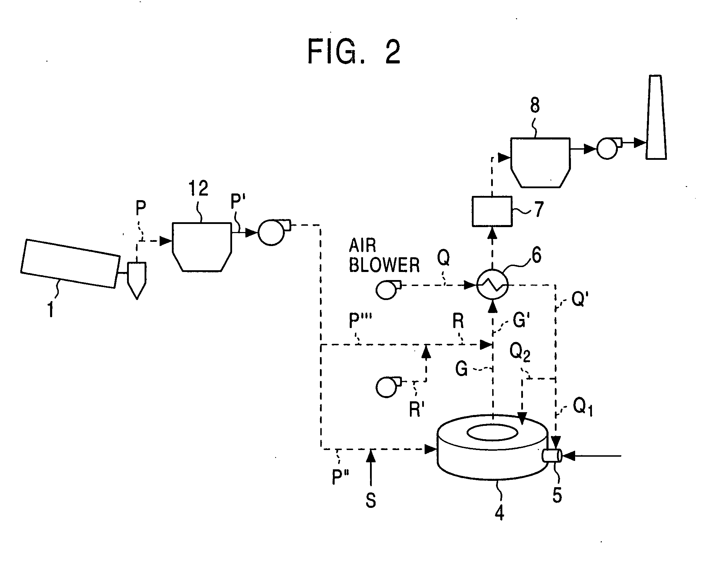

In this embodiment, the dryer exhaust gas P containing such hazardous components in high concentration is subjected to dust collection by a cyclone 11 and/or a dust collector 12, and all of the dust-collected gas P' is blown into the reduction furnace 4 as all or a portion of the secondary combustion air Q2. Since the temperature in the reduction furnace 4 is maintained at 800 to 1,500°C so that metal oxides, such as iron oxide, are reduced by the carbonaceous reductant, the odorous substances and the dioxins are substantially completely decomposed. The dust-collected dryer exhaust gas P' may be blown into the reduction furnace 4 instead of the secondary combustion air Q2 or as the primary combustion air in addition to the secondary combustion air Q2. Only a portion of the dryer exhaust gas P' may be blown into the reduction furnace 4. When only a portion of the dryer exhaust gas P' is blown into the reduction furnace 4, the rest of the dryer exhaust gas P' may be treated with a deodorization unit and a dioxin removal unit as in the conventional method. In such a case, since the rest, not all of, the dryer exhaust gas P' only is treated, the amount of the gas to be treated is decreased, and therefore the size of the treatment units can be decreased, resulting in a decrease in equipment and operating costs. However, as will be described in a third embodiment below, preferably, the dryer exhaust gas is mixed into the reduction furnace exhaust gas G and is then released into the atmosphere, which corresponds to a case in which oxygen S is not added to the dryer exhaust gas P' in the apparatus shown in FIG. 2 described below.

### SECOND EMBODIMENT

The oxygen concentration in the dryer exhaust gas P' is lower than that in air because combustion exhaust gas which is diluted with ambient temperature air in order to control the temperature is usually used as the hot air in the dryer 1. Therefore, as shown in FIG. 2, which shows the gas flow only and from which the solid flow is omitted, preferably, by adding a predetermined amount of oxygen S to a portion P'' of the dryer exhaust gas P' to be blown into the reduction furnace 4, i.e., by performing oxygen enrichment, the oxygen concentration is increased to the same level as or higher than the oxygen concentration of air. By increasing the oxygen concentration of the dryer exhaust gas P'' fed into the reduction furnace 4, the amount of the reduction furnace exhaust gas G is decreased, and sensible heat taken from the reduction furnace by the reduction furnace exhaust gas G is decreased. Consequently, the fuel consumption rate of the reduction furnace 4 can be decreased.

Since the dryer exhaust gas P'' contains water in high concentration, it is also effective to decrease the water content before feeding the dryer exhaust gas P'' into the reduction furnace 4 so that the oxygen concentration is increased. In order to decrease the water content in the dryer exhaust gas P'', a conventional method may be used. For example, the gas P'' is passed through a hygroscopic material, or the temperature of the exhaust gas is decreased with a scrubber or the like to decrease the saturation vapor pressure. In this embodiment, a portion of the dryer exhaust gas P' as dryer exhaust gas P''' is injected into the reduction furnace exhaust gas G.

### THIRD EMBODIMENT

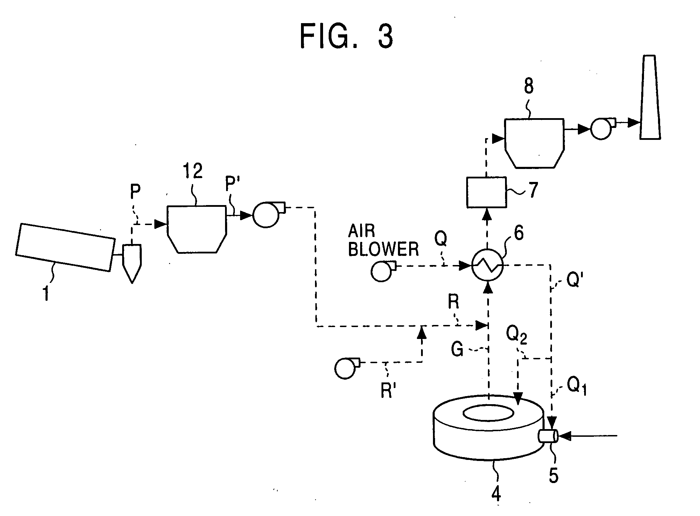

As shown in FIG. 3, which shows the gas flow only and from which the solid flow is omitted, the dryer exhaust gas P' may be injected into the reduction furnace exhaust gas G as all or a portion of the diluent gas R. Preferably, the temperature of the reduction furnace exhaust gas G at the position into which the dryer exhaust gas P' is injected is 800°C or more so that the odorous components and dioxins are efficiently decomposed.

In the embodiments described above, when the dryer exhaust gas is blown into the reduction furnace, since the temperature of the reduction furnace is high, the dryer exhaust gas is subjected to high temperatures and the residence time can be increased, resulting in a satisfactory decomposition rate of the odorous components and dioxins, which is advantageous. However, since the oxidation degree in the furnace is easily increased and the dryer exhaust gas is blown into the furnace as the secondary combustion air, if the oxygen concentration is low, the amount of dryer exhaust gas to be fed is increased, and the energy efficiency in the furnace is degraded.

When the dryer exhaust gas is injected into the reduction furnace exhaust gas, the dryer exhaust gas can be used as an alternative to the diluent gas for controlling the temperature of the reduction furnace exhaust gas, and the energy efficiency is not affected. However, since the temperature of the reduction furnace exhaust gas becomes lower than the temperature in the reduction furnace and the residence time at high temperatures is decreased, the decomposition efficiency of the odorous substances and dioxins slightly declines.

When the dryer exhaust gas is fed into both the reduction furnace and the reduction furnace exhaust gas, although a complex construction is required, blowing into the reduction furnace and injection into the reduction furnace exhaust gas are balanced.

Consequently, depending on the throughput in the reduction furnace, the amount of the reduction furnace exhaust gas, the amount of the dryer exhaust gas, the amounts of the odorous components and dioxins in the dryer exhaust gas, etc., the dryer exhaust gas may be fed only into the reduction furnace or the reduction furnace exhaust gas, or the ratio between the amount of the dryer exhaust gas blown into the reduction furnace and the amount of the dryer exhaust gas injected into the reduction furnace exhaust gas may be appropriately adjusted.

### EXAMPLE 1

Wet waste A was reduced using the apparatus shown in FIG. 1. In this example, in order to specifically produce the effect of the present invention, ammonia and toluene were intentionally added to the wet waste A before the wet waste A was fed into the dryer 1. The dryer exhaust gas P' at the outlet of the dust collector 12 contained 0.10 ppm of toluene, 40 ppm of ammonia, and 0.05 ng-TEQ/m³ (standard conditions) of dioxins. The temperature in the reduction furnace 4 was maintained at 1,200 to 1,350°C, and the concentrations of toluene, ammonia, and dioxins in the reduction furnace exhaust gas G were measured in the case in which no dryer exhaust gas P' was blown into the reduction furnace 4 and in the case in which all the dryer exhaust gas P' was blown into the reduction furnace 4. As a result, there was substantially no difference in the concentrations of toluene, ammonia, and dioxins in the reduction furnace exhaust gas G before and after feeding of the dryer exhaust gas P'. Therefore, it was confirmed that the odorous components and dioxins in the dryer exhaust gas P' were substantially completely decomposed.

### EXAMPLE 2

Wet waste A was reduced using the apparatus shown in FIG. 2. In this example, 7,500 m³ (standard conditions)/h out of 26,000 m³ (standard conditions)/h of the dryer exhaust gas P' was used as the dryer exhaust gas P'', and the dryer exhaust gas P'' was enriched with 1,800 m³ (standard conditions)/h of oxygen S so that the oxygen concentration was 30% by volume and was blown into the reduction furnace 4 as secondary combustion air. The rest of the dryer exhaust gas P', i.e., the dryer exhaust gas P''', was injected into the reduction furnace exhaust gas G with a temperature of approximately 1,100°C as a portion of the diluent gas R. As a result, the fuel consumption rate of the reduction furnace 4 can be decreased by approximately 40% compared to the case in which no dryer exhaust gas P" was blown into the reduction furnace 4. There was substantially no difference in the concentrations of toluene, ammonia, and dioxins in the reduction furnace exhaust gas G before and after feeding of the dryer exhaust gas P' (P'' and P''').

### EXAMPLE 3

Wet waste A was reduced using the apparatus shown in FIG. 3. In this example, all of 26,000 m³ (standard conditions)/h of the dryer exhaust gas P' was injected into the reduction furnace exhaust gas G with a temperature of approximately 1,100°C as a portion of 45,000 m³ (standard conditions)/h of the diluent gas R. The shortage of the diluent gas R was covered with ambient temperature air R'. As a result, there was substantially no difference in the concentrations of toluene, ammonia, and dioxins in the reduction furnace exhaust gas G' before and after the injection of the dryer exhaust gas P'. Therefore, it was confirmed that the odorous components and dioxins in the dryer exhaust gas P' were substantially completely decomposed by being mixed with the high-temperature reduction exhaust gas G.

As described above, in accordance with the present invention, in the method of recovering metals by drying and reducing wet waste generated in the metal refining process, it is possible to efficiently and easily neutralize or remove odorous components and hazardous substances, such as dioxins, contained in an exhaust gas from the dryer. The method is easily put into practical use without extremely increasing the equipment and operating costs in order to treat hazardous substances.

## Claims

1. A method for reducing wet waste comprising:
a drying step of drying wet waste (A), generated during metal refining, in a dryer (1);
a reduction step of reducing the dried waste (A') in a reduction furnace (4); and
a dryer-exhaust-gas-feeding step of feeding all or a portion of a dryer exhaust gas (P) generated in the drying step into the reduction furnace (4).

2. A method for reducing wet waste comprising:
a drying step of drying wet waste (A), generated during metal refining, in a dryer (1);
a reduction step of reducing the dried waste (A') in a reduction furnace (4); and
a dryer-exhaust-gas-mixing step of mixing all or a portion of a dryer exhaust gas (P) generated in the drying step into a reduction furnace exhaust gas (G) emitted from the reduction furnace (4).

3. A method for reducing wet waste comprising:
a drying step of drying wet waste (A), generated during metal refining, in a dryer (1);
a reduction step of reducing the dried waste (A') in a reduction furnace (4);
a dryer-exhaust-gas-feeding step of feeding at least a portion of a dryer exhaust gas (P) generated in the drying step into the reduction furnace (4); and
a dryer-exhaust-gas-mixing step of mixing at least a portion of the dryer exhaust gas (P) into a reduction furnace exhaust gas (G) emitted from the reduction furnace (4).

4. A method for reducing wet waste according to either Claim 2 or 3, wherein the reduction furnace exhaust gas (G) into which the dryer exhaust gas (P) is mixed has a temperature of 800°C or more.

5. A method for reducing wet waste according to either Claim 1 or 3, wherein, in the dryer-exhaust-gas-feeding step, the dryer exhaust gas (P) fed into the reduction furnace (4) is enriched with oxygen (S).
